# EUROPÄISCHE PATENTSCHRIFT

(11) **EP 0 967 325 B1**
(45) Veröffentlichungstag und Bekanntmachung des Hinweises auf die Patenterteilung: **20.08.2008**
(21) Anmeldenummer: 99111817.5
(22) Anmeldetag: 18.06.1999
(51) Int. Cl.: D21G 9/00

(54) **Verfahren und Vorrichtung zur Prozessführung und Prozessoptimierung bei der Herstellung von Fasermatten und/oder Faserplatten**
Method and device for conducting and optimising a process in the production of fibre mats and/or boards
Procédé et dispositif pour conduire et optimaliser un processus lors de la fabrication de nappes et/ou plaques de fibres

(30) Priorität: 22.06.1998 DE 19827509
(43) Veröffentlichungstag der Anmeldung: 29.12.1999
(73) Patentinhaber: SIEMENS AKTIENGESELLSCHAFT, 80333 München (DE)
(72) Erfinder: Hollatz, Jürgen, Dr., 81479 München (DE); Jünnemann, Erwin, 91056 Erlangen (DE); Kessler, Rudolf, Prof. Dr., 72762 Reutlingen (DE); Kessler, Waltraud, Dipl.-Phys., 72672 Reutlingen (DE); Kohler, Robert, Prof. Dr., 72116 Mössingen (DE); Zimmer, Helmut, 9400 Wolfsberg (AT)

(56) Entgegenhaltungen:
- BERNARDY G ET AL: "PROZESSMODELLIERUNG FUEHRT ZUR ONLINE-QUALITAETSKONTROLLE UND PROZESSOPTIMIERUNG BEI DER SPAN- UND FASERPLATTENPRODUKTION" HOLZ ALS ROH- UND WERKSTOFF,DE,SPRINGER-VERLAG. BERLIN, Bd. 55, 1997, Seiten 133-140, XP000885300 ISSN: 0018-3768

## Beschreibung

Die Erfindung betrifft ein Verfahren zur Prozeßführung und Prozeßoptimierung bei der Herstellung von Fasermatten und/oder Faserplatten aus nachwachsenden, holzartigen und/oder lignozellulosischen Rohstoffen, wobei Hackschnitzel aus den Rohstoffen zu Faserstoffen aufbereitet und anschließend zu Matten geformt, und wobei die Matten getrocknet und/oder in einer Preßmaschine verpreßt werden.

Die klassische Methode der Herstellung von Holzfaserplatten ohne chemischen Binder ist der Naßprozeß. Aus Preisgründen haben sich jedoch in den letzten Jahren Trockenprozesse zur Herstellung von sog. "Particle Boards" oder auch sog. MDF-Platten (medium density fibreboard) durchgesetzt. In den Trockenprozessen zur Herstellung der Platten werden erhebliche Mengen an Zusatzstoffen, wie z.B. phenolische Harze als Klebe- und Bindemittel, zugegeben, was vom ökologischen Standpunkt aus nicht akzeptabel ist.

Das Eigenschaftsprofil der Faserplatten aus dem Trockenprozeß wird im wesentlichen von der Art des eingesetzten Harzes bestimmt, weniger vom verwendeten Holz. Außerdem bietet die Trockenverarbeitung eine geringere Zahl von Steuerparametern. Deshalb ist auf diesem Weg eine Herstellung von Faserplatten mit unterschiedlichem und anpaßbarem Eigenschaftsprofil nur in eingeschränktem Maße möglich.

Im Gegensatz zu den Trockenprozessen erlaubt der Naßprozeß die Nutzung der natürlichen Bindemittel des Holzes, wie insbesondere Lignin, Hemicellulosen und Celluloseabbauprodukte, so daß zum Teil ganz auf zusätzliche Bindemittel oder Zuschlagstoffe verzichtet, bzw. deren Anteil sehr gering gehalten werden kann.

Die Produkteigenschaften werden bestimmt von der Rohstoffqualität und der Prozeßführung. Untersuchungen haben ergeben, daß bei der Naßherstellung von Faserplatten durch Einsatz unterschiedlicher Hölzer, die auch Einjahrespflanzen sein können, bzw. von Holzmischungen und durch unterschiedliche verfahrenstechnische Prozeßvarianten, wie z.B. Temperatur, Druck, Refinerzeit, eine breite Palette unterschiedlichster Eigenschaftsprofile erzeugt werden können.

Bisher werden Faserplatten mit mehr oder weniger Wasseraufnahme, mehr oder weniger Festigkeit, mehr oder weniger Verformbarkeit durch rein empirische Variation der Rohstoff- und Verfahrensparameter hergestellt. Das Ziel einer modernen Produktionstechnik ist aber die optimierte Herstellung von maßgeschneiderten Produkten auf möglichst ökonomischer und ökologischer Basis. Dabei muß auf wechselnde Rohstoffqualitäten der Naturstoffe ebenso eingegangen werden wie auf die unterschiedlichen Anforderungsprofile des Anwenders.

Es besteht daher die Forderung, den Einfluß der wesentlichen Rohstoffkenngrößen auf die Produktionsbedingungen und die Produkteigenschaften quantitativ zu ermitteln. Es besteht weiterhin der Wunsch, den Produktionsprozeß so variabel zu gestalten und zu steuern, daß die Eigenschaften der Rohstoffe zur Erzielung unterschiedlicher Produktqualitäten voll ausgenützt werden können und daß der Prozeß unter der dafür jeweils optimalen Betriebsweise geführt wird. Schließlich besteht die Forderung, den Produktionsprozeß so exakt zu überwachen und zu regeln, daß unter allen Bedingungen eine konstante Produktqualität sichergestellt wird.

Aus der Veröffentlichung "Holz als Roh- und Werkstoff" 55 (1997), S. 133-140 ist ein Verfahren gemäß dem oberbegriff des Anspruchs 1 bekannt, wobei eine Prozeßmodellierung für eine Online-Qualitätskontrolle bei der Span- und Faserplattenproduktion durchgeführt wird. Dabei werden im laufenden Betrieb der Anlage über einen längeren Zeitraum Prozeßdaten und Produktdaten erfaßt und aus deren statistischer Auswertung Modelle erstellt. Zum Einsatz kommen also empirischstatistisch gewonnene Modelle. Die Online-Qualitätskontrolle erfolgt danach dadurch, daß weiterhin die Prozeßdaten erfaßt und entsprechend den Modellen eingestellt werden. Veränderte physikalisch-chemische Eigenschaften des Rohstoffes, die systembedingt zu einer Änderung der Herstellungsparameter führen müssen, können dabei nicht berücksichtigt werden.

Letztere empirische Modellbildung, die im wesentlichen von konstanten und reproduzierbaren Bedingungen ausgeht, versagt daher, wenn eine prinzipielle Änderung im Prozeß oder bei den Rohstoffen auftritt. Dies ist beispielsweise der Fall, wenn eine bisher nicht verwendete Holzqualität oder Holzmischung eingesetzt wird. Dies ist deshalb wichtig, weil in der Praxis in zunehmendem Maße zur Fasermattenherstellung Einjahrespflanzen mit einem von Holz abweichenden Eigenschaftsprofil eingesetzt werden sollen.

Ausgehend von letzterem Stand der Technik ist es Aufgabe der Erfindung, ein Verfahren anzugeben, mit dem die Herstellung von Fasermatten und/oder Faserplatten im Sinne der vorstehend genannten Anforderungen verbessert wird.

Die Aufgabe ist erfindungsgemäß bei einem Verfahren der eingangs genannten Art durch die Abfolge der Verfahrensschritte des Patentanspruches 1 gelöst. Weiterbildungen sind in den Unteransprüchen angegeben.

In Abweichung zum Stand der Technik werden bei der Erfindung Fundamentalmodelle benutzt, die aus der grundlegenden wissenschaftlichen Analyse der Verarbeitung des Rohstoffes und der damit erfolgten Prozessierung abgeleitet werden. Die grundlegenden physikalisch-chemischen Zusammenhänge sind allgemein gültig und von den augenblicklich verwendeten Rohstoffen und Prozeßbedingungen unabhängig. Damit können auch prinzipiell abweichende Rohstoffeigenschaften erfaßt und die Prozeßbedingungen entsprechend angepaßt werden.

Die Fundamentalmodelle ermöglichen daher eine "Feed-Forward"-Regelung beispielsweise in Abhängigkeit von variablen Holzsorten, bzw. des Alters der speziell vorliegenden Holzsorte und weiterer spezifischer Gegebenheiten. Statistische Auswertungen der bei der Fertigung eingehaltenen Prozeßparameter zum Auffinden von Abhängigkeiten und deren Korrelationen zum Fertigprodukt von sind dafür nicht erforderlich. Vielmehr werden, ausgehend von den physikalisch-chemischen Fundamentalmodellen, die Rohstoffeigenschaften erfaßt und die Prozeßparamenter daraufhin abgestimmt geregelt.

Besonders vorteilhaft ist, daß mit der erfindungsgemäßen Lösung nun gezielt Faserplatten "nach Wunsch" hergestellt werden können. Dazu wird folgendermaßen vorgegangen:
- In einem ersten Schritt werden die möglichen Rohstoff- und Prozeßvariablen aufgelistet und mit Hilfe statistischer Versuchspläne werden experimentell die Einflüsse der Rohstoff- und Prozeßbedingungen auf die definierten Zielgrößen quantitativ bestimmt. Aus den so gefundenen Zusammenhängen wird ein erstes Modell des Produktionsprozesses aufgestellt. Zugleich jedoch dienen die Ergebnissen auch zur Ermittlung und Verifizierung geeigneter Meßgrößen, insbesondere eines spezifischen Materialprofils, mit denen die Rohstoff- und Prozeßvariablen anhand der resultierenden Produkteigenschaften charakterisiert werden können.
- In einem zweiten Schritt werden aus den Ergebnissen des ersten Schrittes einerseits eine Regelbasis für die Verfahrensführung geschaffen und darüber hinaus die meßtechnischen Grundlagen für eine kontinuierliche Kontrolle und Steuerung.

Das erfindungsgemäße Vorgehen liefert zusätzlich die Möglichkeit, mit Hilfe der Fundamentalmodelle völlig neue Kombinationen der Eigenschaftsprofile zu generieren und vorausberechnen, sowie deren Produktion entsprechend zu steuern.

Überraschend an der erfindungsgemäßen Vorgehensweise ist erstens, daß auf einfache Weise spezifische Materialprofile erhalten werden, die sich als unmittelbare Basis für die Erstellung eines Regelwerkes eignen. Daneben führt die erfindungsgemäße Vorgehensweise zu einer völlig neuen Art der Prozeßregelung, die direkt von den Rohstoffeigenschaften und Produktqualitäten ausgeht und nicht über die bisher verwendeten indirekten Steuergrößen abläuft, wie sie beispielsweise in der Übersicht gemäß Bild 1 von "Holz als Roh- und Werkstoff" 55 (1997), Seiten 133 bis 140 angegeben sind.

Bei der Aufstellung der Versuchspläne ist zu beachten, daß die Prozeßgrenzen nicht zu eng gewählt sind, da sonst nur die Fehler innerhalb der Produktion bestimmt werden können. Andererseits sollten die Verfahrensgrenzen nicht zu groß gewählt werden, da sonst unter- oder überprozessierte Fasern erzeugt werden. Aus den Ergebnissen erhält man dann für jedes Holz und jede Holzmischung ein typisches Eigenschaftsprofil in Abhängigkeit der Verfahrens- und Rohstoffparameter, das dann als Modelldatensatz oder Expertendatensatz benützt werden kann.

Wichtige Rohstoffkenngrößen sind z.B. die Art des Holzes, z.B. Hart- oder Weichholz oder Fasern aus Einjahrespflanzen, die Mischungskonzentrationen der Holzstoffe inklusive der Beimengung an Rinde, sowie das Alter des Holzes. Die Qualität des Endproduktes bei der Herstellung von Hartfaserplatten wird im Hinblick auf die verschiedenen Einsatzzwecke über technologische Kenngrößen definiert, wie z.B. Biegefestigkeit, Zugfestigkeit, Berstfestigkeit, Moduln etc. Diese mechanischen Daten werden einerseits insbesondere durch den morphologischen Aufbau des Holzes und der daraus resultierenden Fasern, sowie andererseits auch in erheblichem Maße durch die Aktivierung der im Holz befindlichen Klebestoffe bzw. Bindemittel, wie z.B. Lignin, Hemicellulose und Zuckerstoffe bestimmt. Weitere wichtige Anwendungseigenschaften, wie z.B. die Wasseraufnahme und das Quellvermögen der Faserplatten, werden ganz überwiegend nur durch die chemische Zusammensetzung des Holzes vor und nach dem Aufschluß bestimmt.

Maßgebliche Prozeßvariablen sind Temperatur und Zeit der Sattdampfbehandlung sowie die mechanischen Prozeßparameter Plattenabstand und relative Geschwindigkeit der Rotoren und Statoren im Refiner.

Weitere Einzelheiten und Vorteile der Erfindung ergeben sich aus der nachfolgenden Figurenbeschreibung von Ausführungsbeispielen anhand der Zeichnung in Verbindung mit weiteren Ansprüchen. Es zeigen
- Figur 1: ein Ablaufschema für die Herstellung von Fasermatten bzw. Faserplatten,
- Figur 2: ein Flußdiagramm zur Erläuterung der neuen Vorgehensweise,
- Figur 3: ein Diagramm zur generellen Abhängigkeit von mechanischen Produkteigenschaften vom sog. Severity-Faktor,
- Figur 4: ein spezifisches Diagramm gemäß Figur 3 für unterschiedliche Holzsorten,
- Figur 5: ein Diagramm zur generellen Abhängigkeit von chemischen Produkteigenschaften vom sog. Severity-Faktor,
- Figur 6: ein spezifisches Diagramm gemäß Figur 5 für unterschiedliche Holzsorten,
- Figur 7: ein Diagramm zur Verdeutlichung der Modellgleichungen,
- Figur 8: eine Projektion aus Figur 7,
- Figur 9: ein Schema zur Realisierung eines PC-basierten Leitsystems,
- Figur 10: ein Diagramm entsprechend Figur 7 für ein System gemäß Figur 9 und
- Figur 11: die technische Realisierung eines Fuzzy-Systems zwecks Prozeßsteuerung der beschriebenen Anlage.

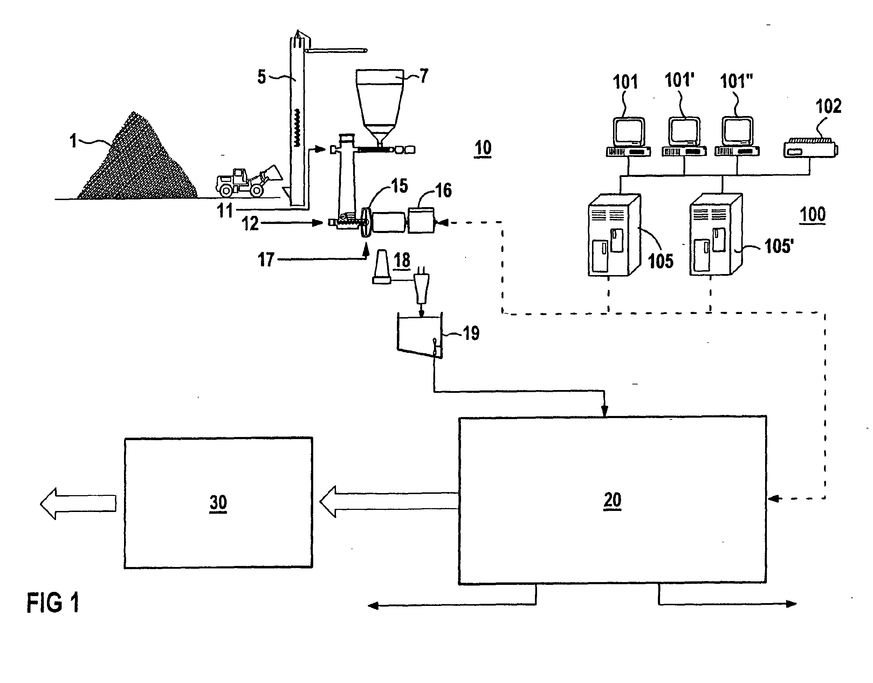

Figur 1 verdeutlicht ein sog. "Flow Sheet" eines Naßprozesses zur Faserplattenherstellung mit den einzelnen Arbeitsschritten.

In Figur 1 ist eine Anlage zur Herstellung von Fasermatten bzw. Faserplatten dargestellt, die im wesentlichen aus einem Refiner 10 mit entsprechender Peripherie, einer Entwässerungsanlage 20 und einer Preßmaschine 30, besteht, der eine zugehörige Prozeßsteuer- und Regeleinheit 100 mit Leitsystem, PC und anderen Automatisierungseinheiten zugeordnet ist.

Vor dem eigentlichen Refiner 10, der in bekannter Weise eine Vorrichtung zum Mahlen bzw. Zerfasern von Holzhackschnitzeln aufweist, ist eine Station 1 zur Aufbereitung von Holz oder entsprechender schnellwachsender holzartiger Gewächse als lignozellulosische Zellstoffe vorhanden. In dieser Station werden aus den Rohstoffen Hackschnitzel erzeugt, die über eine Förderanlage 5 und einen Trichter 7 unter Einsatz von Dampfdruck und eventuell chemischen Zuschlagsstoffen einem Mahlprozeß zugeführt werden. Der Refiner 10 hat verschiedene Zuführungen, z.B. die Zuführungen 11 und 12, für die Zugabe von Additiven, die den Arbeitsprozeß unterstützen.

Der Refiner 10 beinhaltet eine Mahlanlage, die aus einem Mahlwerk 15 und zugehörigem Antrieb 16 besteht, wobei die Betriebsparameter, wie bspw. Spalt oder Drehzahl, der Mahlanlage veränderbar sind. Im Mahlwerk 15 werden die Hackschnitzel zu Fasern umgewandelt, wobei gleichermaßen ein chemischer Aufschluß zur Herauslösung des Lignins vorgenommen wird. In zwei Stationen 18 können die Fasern von Begleitstoffen getrennt werden. In einer Bütte 19 erhält man Faserstoff als Zwischenprodukt.

Die so hergestellten Fasern können zu flexiblen Matten geformt werden, die entweder unmittelbar getrocknet und damit als Produkt fertiggestellt sind oder die nach der Entwässerung weiter zu starren Platten vorgegebener Formgebung verpreßt werden. Dazu ist eine Entwässerungsmaschine 20 und eine anschließende Preßanlage 30 aus einzelnen Preßeinrichtungen vorhanden, in der in einem mehrstufigen Vorgang die Matten zu Platten verdichtet und verpreßt werden. Das Prozeßwasser kann dabei gesammelt und gegebenenfalls in den Prozeß zurückgeführt werden unter Ausbringung eines Teils als Abwasser.

Der gesamten Anlage ist ein Prozeßleitsystem zur Prozeßautomatisierung zugeordnet, das pauschal mit 100 bezeichnet und beispielhaft aus einzelnen Einheiten 105, 105' zur Prozeßautomatisierung und zugeordneten Rechnern 101, 101' besteht. Ziel ist es, die Prozeßführung zu optimieren.

Es können sich Beispiele für unterschiedliche Anforderungsprofile von Faserplatten beim bestimmungsgemäßen Gebrauch ergeben. Beispielsweise für Faserplatten sind die Parameter Biegefestigkeit, Wasserlagerungswerte, Oberflächenbeschaffenheit, Verformbarkeit, etc. von großer Bedeutung und bestimmen daher die Anwendungsbereiche für Autoinnenteile, Lackierung, Türoberflächen, Bleistiftholzersatz, Bohrunterlagen, Bauindustrie, usw..

Zur Erzielung gleichbleibender Produktqualitäten müssen die empirisch gefundenen Mischungsverhältnisse und Produktionsbedingungen, wegen der sehr großen Variabilität der natürlichen Rohstoffe, sehr robust, d.h. auch gegen stärkere Schwankungen unempfindlich sein. Dies bedeutet aber, daß mit der heutigen Praxis die theoretisch möglichen Eigenschaften der Produkte nicht erreicht werden, daß aber auch der Produktionsprozeß nicht unter den jeweils optimalen Bedingungen geführt werden kann.

Wünschenswert ist, wenn man einerseits Fasern und Faserplatten mit noch unterschiedlicheren Eigenschaftsprofilen gezielt ("tailor made" = maßgeschneidert) herstellen könnte, bzw. andererseits, möglichst schon vor der eigentlichen Produktion, aus vorhandenen Datensätzen die dafür im einzelnen notwendigen und günstigsten Produktionsbedingungen vorausberechnen könnte. Da für die Lösung dieses Problemes die Optimierung eines vieldimensionalen Raumes erforderlich ist, stößt man mit normalen "Trial and Error"-Methoden oder empirischen Ansätzen schnell an Grenzen. Außerdem reicht die klassische Steuerungstechnologie, die ausschließlich auf der Regelung der maschinentechnisch einstellbaren Parameter beruht nicht aus, um Rohstoff- oder produktbedingte Eigenheiten ausreichend zu erkennen und zu berücksichtigen.

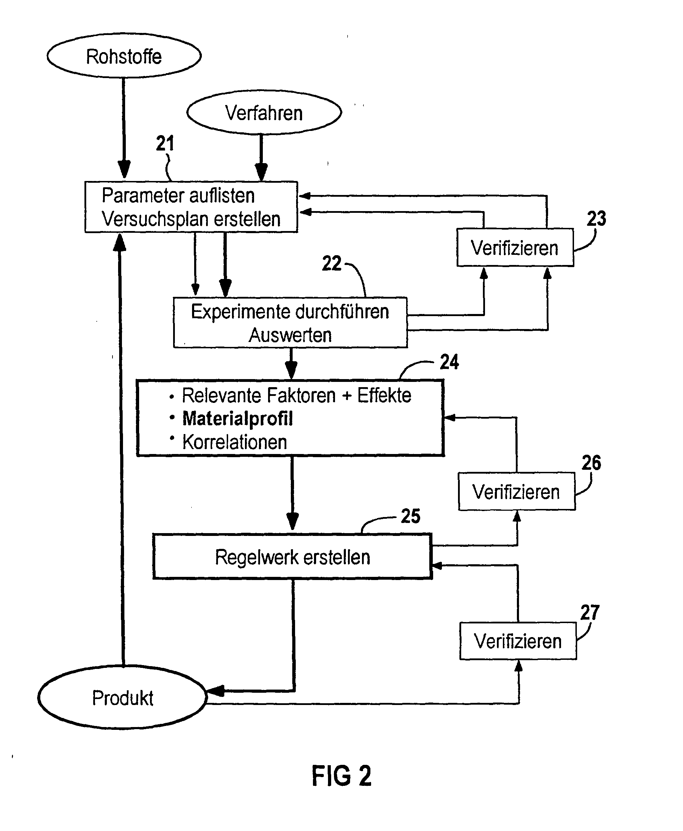

Um gezielt Faserplatten "nach Wunsch" herstellen zu können, wird entsprechend dem Flußdiagramm gemäß Figur 2 vorgegangen:
- Im ersten Schritt werden die möglichen Rohstoff- und Prozeßvariablen aufgelistet und mit Hilfe statistischer Versuchspläne werden experimentell die Einflüsse der Rohstoff-und Prozeßbedingungen auf die definierten Zielgrößen quantitativ bestimmt. Aus den so gefundenen Zusammenhängen wird ein erstes Modell des Produktionsprozesses aufgestellt. Zugleich jedoch dienen die Ergebnissen auch zur Ermittlung und Verifizierung geeigneter Meßgrößen, insbesondere eines spezifischen Materialprofils, mit denen die Rohstoff- und Prozeßvariablen anhand der resultierenden Produkteigenschaften charakterisiert werden können.
- Im zweiten Schritt werden aus den Ergebnissen des ersten Schrittes einerseits eine Regelbasis für die Verfahrensführung geschaffen und darüber hinaus die meßtechnischen Grundlagen für eine kontinuierliche Kontrolle und Steuerung.

Letzteres Vorgehen liefert zusätzlich die Möglichkeit, mit Hilfe der Datenbasis völlig neue Kombinationen der Eigenschaftsprofile zu generieren und vorausberechnen, sowie deren Produktion entsprechend zu steuern.

Bei dieser Vorgehensweise können auf einfache Weise spezifische Materialprofile erhalten werden, die sich als unmittelbare Basis für die Erstellung eines Regelwerkes eignen. Zweitens führt die erfindungsgemäße Vorgehensweise zu einer völlig neuen Art der Prozeßregelung, die direkt von den Produkteigenschaften ausgeht und nicht wie bisher über indirekte Steuergrößen abläuft.

Bei der Aufstellung der Versuchspläne ist zu beachten, daß die Prozeßgrenzen nicht zu eng gewählt sind, da sonst nur die Fehler innerhalb der Produktion bestimmt werden können. Anderseits sollten die Verfahrensgrenzen nicht zu groß gewählt werden, da sonst unter- oder überprozessierte Fasern erzeugt werden. Aus den Ergebnissen erhält man dann für jedes Holz und jede Holzmischung ein typisches Eigenschaftsprofil in Abhängigkeit der Verfahrens- und Rohstoffparameter, das dann als Modelldatensatz oder Expertendatensatz benützt werden kann.

In Figur 2 ist dargestellt, wie aus den Rohstoffen als Ausgangsprodukt über das zugeordnete Verfahren ein Endprodukt entsteht. In einer Einheit 21 werden die Parameter aufgelistet und ein Versuchsplan erstellt. Nach Durchführung der Experimente erfolgt eine Auswertung gemäß der Einheit 22 und eine Verifizierung gemäß der Einheit 23. Dies kann zu einer Rückkopplung in die Einheit 21 mit Veränderung der Parameter und Versuchsplan führen. In einer Einheit 24 werden alle relevanten Faktoren und Effekte dokumentiert, Materialprofile erstellt und entsprechende Korrelationen bestimmt. Daraus wird in der Einheit 25 ein Regelwerk erstellt, mit dem unmittelbar die Eigenschaftsprofile vorausberechnet werden können und somit die Steuerung des Verfahrens erfolgen kann, so daß das Produkt entsprechend den Vorgaben geliefert wird. In Einheiten 26 und 27 erfolgt jeweils, ausgehend vom Regelwerk und ausgehend vom erzeugten Produkt, eine Verifizierung, über die eine Änderung der Parameter möglich ist.

Aus dem ersten Schritt der erfindungsgemäßen Vorgehensweise hat sich als wesentliche und überraschende Erkenntnis ergeben, daß anstelle der Prozeßvariablen "Druck", welcher zugleich der Sattdampftemperatur entspricht, und "Behandlungszeit" günstigerweise der sog. "Severity Factor" (= SFC) verwendet wird. Dieser Begriff ist in der Fachwelt an sich bekannt und wird beispielsweise in Chemical Abstracts 129 (1998)-110264 im einzelnen definiert (vgl.auch Overend, R.P.8 chornet, E., Fractionation of lignocellulosics by steam-aqueous pretreatments, Phil. Trans. R.Soc. Lond. A 321 (1987), 523-536.). Überraschend war jedoch insbesondere, daß sich aus den Ergebnissen der Grundlagenversuche nur in Verbindung mit dem SFC einfache, physikalisch-chemische Fundamentalmodelle erstellen lassen.

Als weitere Variable können die mechanischen Refinerparameter, wie Spalt, Drehzahl, Geometrie, und chemische Faktoren, wie zusätzliche Bindemittel oder die natürlichen inhärenten Klebstoffe, die aus dem Aufschluß ins Siebwasser gelangen, in das Modell integriert werden. Ziel ist jedoch immer, durch in sich geschlossene Kreisläufe und ohne Zugabe von weiteren Chemikalien ein ökologisch wertvolles technisches Endprodukt zu erzeugen. Mit Hilfe der aus der im einzelnen beschriebenen Vorgehensweise gewonnenen Kenngrößen lassen sich nun Fasermatten bzw. Faserplatten mit unterschiedlichem Eigenschaftsprofil herstellen.

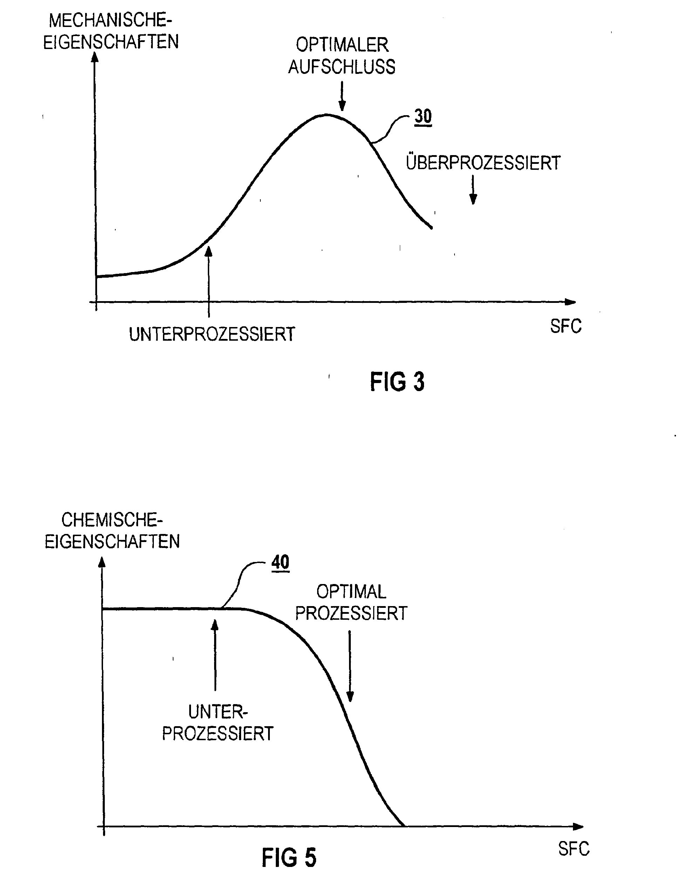

In Figur 3 sind die generellen mechanischen Eigenschaften der Produkte aus entsprechend prozessierten Refinerstoffen in Abhängigkeit vom SFC dargestellt. Es ergibt sich eine 'Glockenkurve' 30 der Eigenschaften als Funktion des SFC. Aufgrund grundsätzlicher Überlegungen ergibt sich, daß der Bereich des optimalen Aufschlusses im Bereich des Maximums der Glockenkurve 30 liegt. Entsprechendes ist in Figur 5 für die chemischen Eigenschaften dargestellt, wobei hier der Bereich des optimalen Aufschlusses in die abfallende Flanke der Kurve 40 fällt.

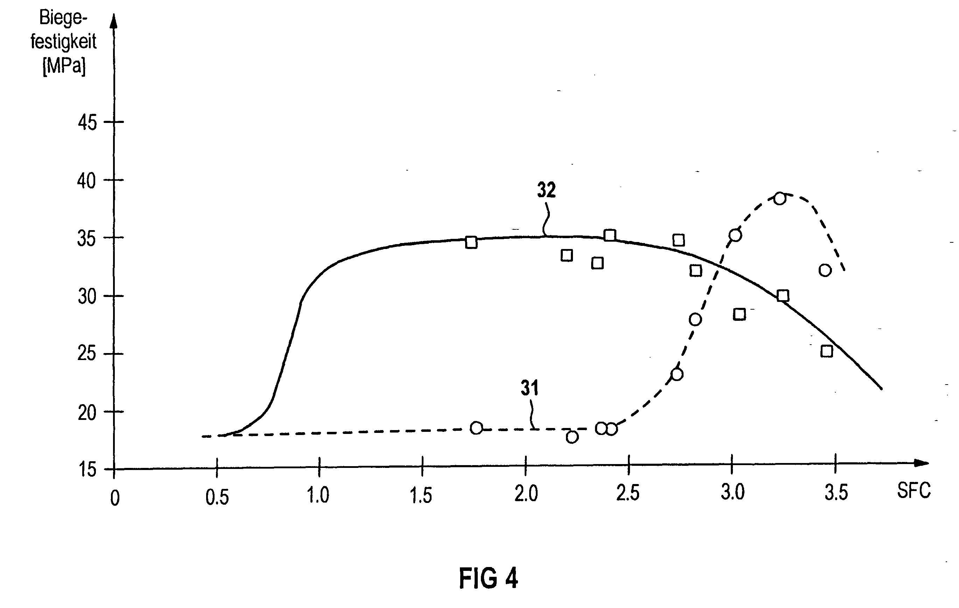

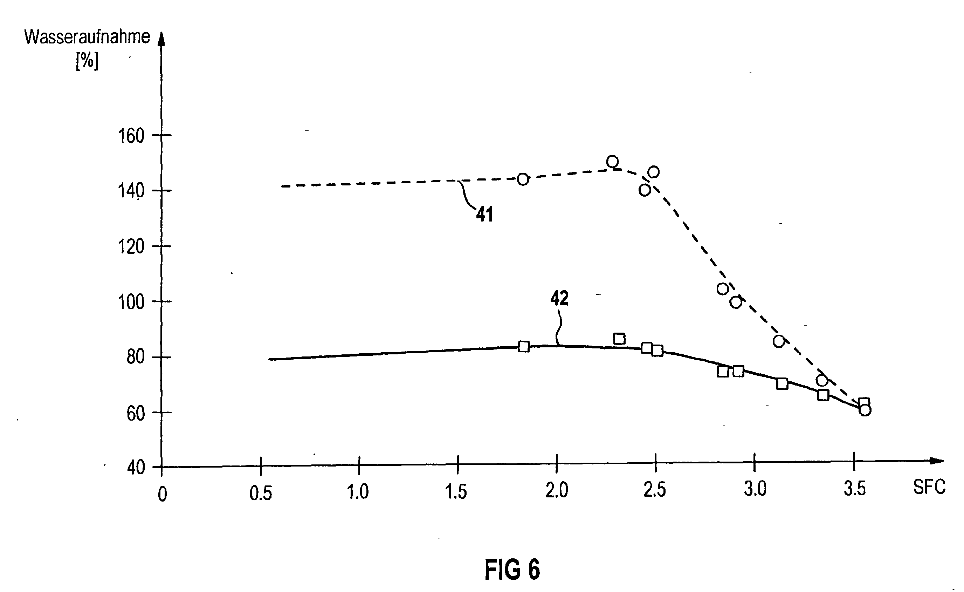

Die Figur 4 einerseits sowie die Figur 6 andererseits zeigen in Konkretisierung der Figuren 3 und 5 typische Eigenschaftsprofile 31 bzw. 41 für Hartholz, z.B. Buche ("beech") und 32 bzw. 42 Weichholz, z.B. Fichte ("spruce"), in Abhängigkeit des Prozeßparameters SFC. Als Beispiele für die wichtigsten technologischen Eigenschaften können einerseits für die mechanischen Eigenschaften die Biegefestigkeit der Fasermatten bzw. Faserplatten entsprechend Figur 3 und 4 sowie andererseits für die chemischen Eigenschaften die Wasseraufnahme der Fasermatten bzw. Faserplatten entsprechend Figur 5 und 6 angegeben werden, da sie typische Profile zeigen und weitgehend repräsentativ für alle anderen Eigenschaften sind. Allerdings sind die jeweiligen Kurven je nach Holzsorte auf der Ordinate verschoben, so daß sich der optimale Aufschluß jeweils für unterschiedliche SFC ergibt.

Die Figuren 4 und 6 geben diesbezügliche experimentelle Ergebnisse wieder, mit denen die prinzipiellen Kuvenverläufe aus Figur 3 und Figur 5 bestätigt werden. Dabei wurden aus den Meßpunkten Kurven 31 und 32 sowie 41 und 42 interpoliert. Aus den Kurven 31 und 32 der Figur 4 sowie den Kurven 41 und 42 der Figur 6 kann man deutlich Bereiche mit zu geringem Aufschluß bzw. zu geringer Aktivierung, bei denen also die Fasererzeugung mit Holzaufschluß "unterprozessiert" ist oder aber Bereiche mit beginnender Degradation, d.h. "überprozessiert", ersehen. Man spricht im ersteren Fall von einer "Unterprozessierung" und im anderen Fall von einer "Überprozessierung". Ziel ist es, die geeignete Prozessierung zu erreichen.

Das Eigenschaftsprofil kann derart gestaltet werden, daß entweder sortenreines Holz prozessiert wird und danach die Fasern unterschiedlicher Hölzer bzw. Hölzer mit unterschiedlichem Aufschlußgrad gemischt werden, oder Rohholzmischungen gemeinsam prozessiert werden. In erster Näherung lassen sich die Eigenschaftsprofile der Faserplatten linear aus dem Eigenschaftsprofil der Fasern der unterschiedlichen Holzsorten kombinieren. Durch die Kombination der Eigenschafts-profile der reinen Holzsorten sowie deren Fasermischungen lassen sich somit beliebige neue Hartfaserplatten mit in weiten Grenzen einstellbarem Eigenschaftsprofil erzeugen.

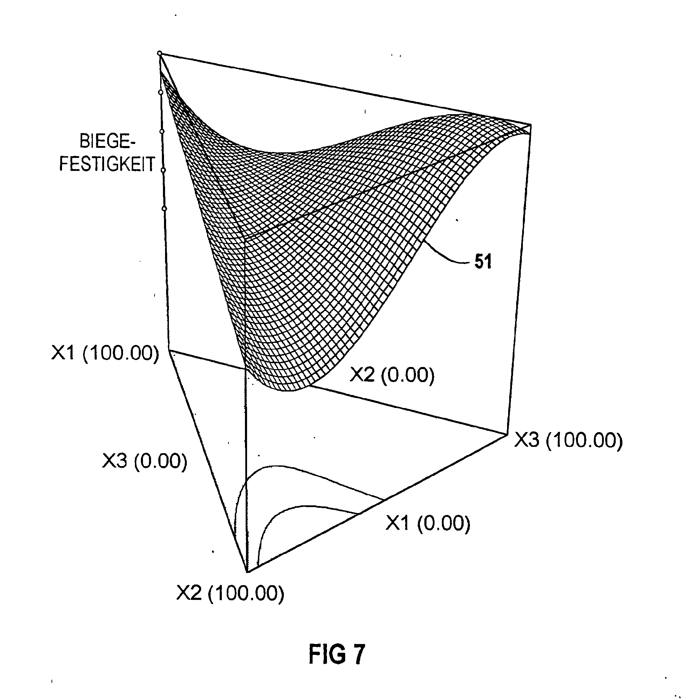

Aus dem Diagramm gemäß Figur 7 ist beispielhaft erkennbar, wie sich insbesondere bei Vorgabe unterschiedlicher Ausgangsmaterialien die Eigenschaften ergeben. In diesem Fall wird von Modellgleichungen gesprochen, die sich konkret bei drei unterschiedlichen Materialien als Sattelfläche 51 entsprechend einem Dreistoffsystem in der Werkstoffkunde ergeben. Dabei sind als Eckpunkte der Dreiecksgrundfläche Fichte (x₁ ≙ Spruce Low) und verschiedene Qualitäten von Buche (x₂ ≙ Beech Low, x₃ ≙ Beech High) aufgetragen und als weitere Variante die Biegefestigkeit in Abhängigkeit von x₁, x₂ und x₃.

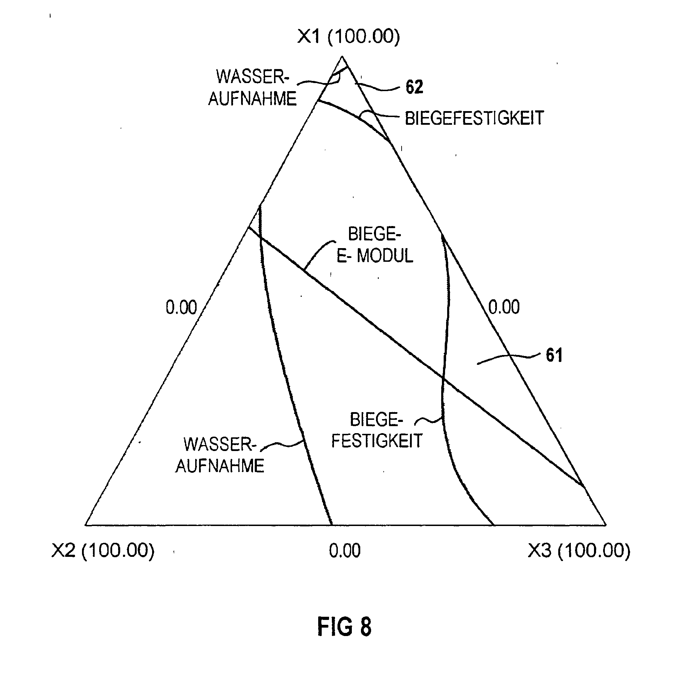

Gemäß Figur 8 werden unterschiedliche Eigenschaften, wie beispielsweise die Biegefestigkeit, der Biege-E-Modul und die Wasseraufnahme aus Diagrammen entsprechend Figur 7 4 und 6 auf eine Ebene projiziert. In dieser Ebene verlaufen die Grenzlinien für die angegebenen Eigenschaften, bei denen die vorgegebenen Bedingungen erreicht werden. Beispielsweise ergibt sich in Figur 8 das Areal 61 und das Areal 62, die gleichzeitig die unterschiedlichen Randbedingungen erfüllen und in denen die Prozeßführung zu erfolgen hat.

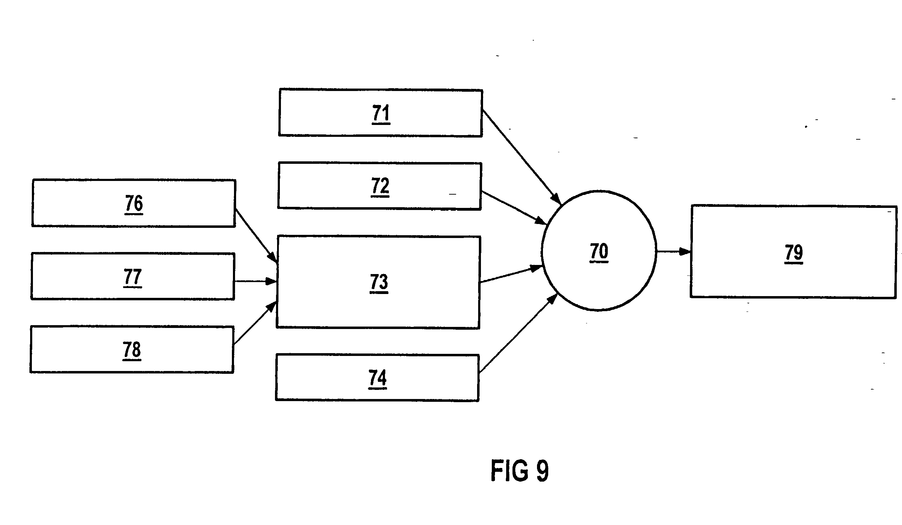

In der Blockdiagrammdarstellung gemäß Figur 9 ist verdeutlicht, wie ein Regelwerk für ein Leit- und Automatisierungssystem 100 aus Figur 1 erstellt werden kann. Zur Bestimmung einer Regelbasis 70 ist in Blöcken 71 bis 74 vorgegeben, beispielsweise die Holzmischung, das Alter des Holzes, der "Severity Factor" (SFC) und der Spalt des verwendeten Refiners. In den "Severity Factor" geht - wie beispielhaft anhand der Figuren 3 und 4 beschrieben wird - weiterhin die Temperatur, der Druck und die Zeit entsprechend den Einheiten 76 bis 78 der Figur 9 ein.

Als Ergebnis der Verwendung der Regelbasis 70 ergibt sich in der Ausgabeeinheit 79 die Flexibilität der erzeugten Fasermatten bzw. Faserplatten zum Istwert/Sollwertvergleich in der Regelstrecke.

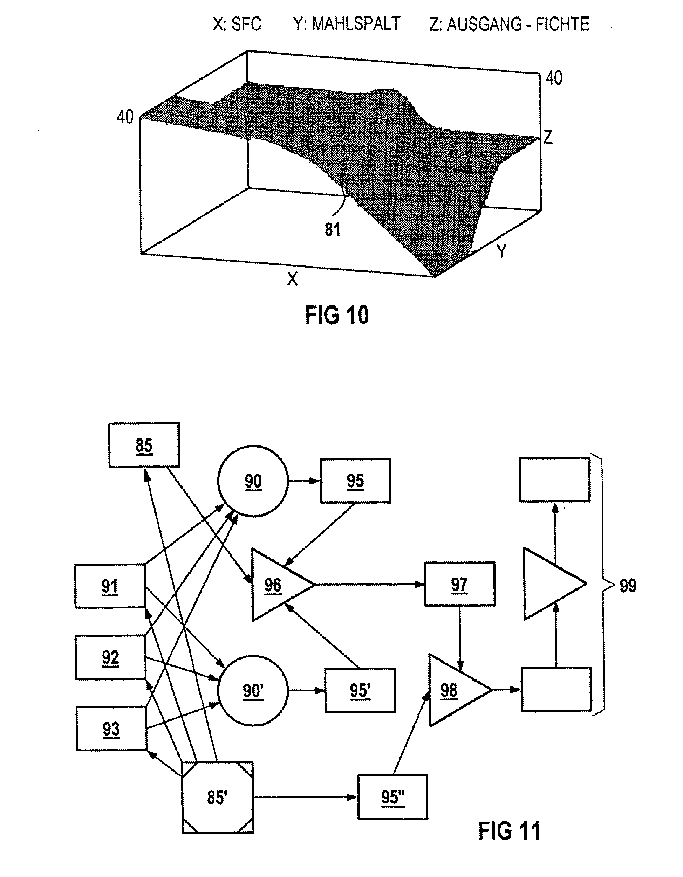

Letzteres kann ebenfalls anhand eines entsprechenden Diagrammes verdeutlicht werden, das in Figur 10 wiedergegeben ist. Es ergibt sich die gekrümmte Fläche 81 für entsprechende Eigenschaftsprofile bei vorgegebenen Randbedingungen des Refiners.

Die einzelnen Eigenschaftsprofile der Hölzer bilden somit die Wissensbasis für die Modellierung des gesamten Prozesses. Es können beliebige Optimierungsverfahren eingesetzt werden. Als besonders vorteilhaft hat sich eine Fuzzy-Modellierung erwiesen.

Das Fuzzy-Modellierungsverfahren besteht aus der Festlegung der zugrunde gelegten Zugehörigkeitsfunktionen und der Erstellung der Fuzzy-Regeln für die Regelbasis. Die Figur 11 zeigt, wie die Modellparameter durch die Regelbasis miteinander in Zusammenhang stehen.

Ein wesentlicher Schritt zur Generierung des Fuzzy-Modells besteht in der Festlegung der Fuzzy-Mengen. Diese werden durch die Einstellparameter definiert. Der nächste Schritt besteht in der Definition der Fuzzy-Regeln. Im Gegensatz zu dem üblicherweise benutzten sog. Expertensystem mit Expertenwissen werden jedoch erfindungsgemäß die Ergebnisse der durch die statistischen Versuchspläne generierten Faserprofile verwendet.

In Figur 11 ist im einzelnen der schematische Aufbau eines Fuzzy-Systems für obige Aufgabe dargestellt: Es wird von zwei Holzarten ausgegangen, für die jeweils ein Dateneingang 85, 85' vorhanden ist und für die eine Regelbasis 90, 90' erstellt wird. In den Einheiten 91 bis 93 ist das Alter, der "Severity Factor" und der Spalt des Refiners dokumentiert. Diese Daten wirken je auf die Regelbasis, so daß Ausgänge 95 und 95' für die unterschiedlichen Holzsorten generiert werden. Über eine Gewichtungseinheit 96 wird in der Einheit ein Ausgangssignal erzeugt, das mit den Daten des anfallenden Prozesses verglichen wird. In einer Subtrahiereinheit 98 wird das Ausgangssignal entsprechend der Einheit 99 erzeugt.

Das auf Fuzzy-Regeln basierende Prozeßmodell kann zur Simulation des Prozesses benutzt werden, ohne daß ein kostenträchtiger Aufwand notwendig wäre. Außerdem können damit Prozessierungsvarianten durchgerechnet werden, die physikalisch nur schwer zu realisieren sind. Durch die rechnergestützte Fuzzy-Beschreibung und die daraus resultierende computergestützte Prozeßsimulation können für ein gewünschtes Eigenschaftsprofil die zugehörigen Steuerungsgrößen ermittelt werden. Dazu werden im Rechenmodell bei Erreichen des erwünschten Profils die zugehörigen Steuergrößen abgelesen.

Will man nun Faserplatten mit einem definierten n-dimensionale Eigenschaftsprofil erzeugen, so kann das rechnergestützte Fuzzy-Modell aufgrund der vorhandenen Datenbasis und den linearen Gleichungen zur Prozeßsimulation benutzt werden, um herauszufinden, wie dieses Eigenschaftsprofil erreicht werden kann.

Bei dem beschriebenen System lassen sich durch Mischung von reinen prozessierten Holfaserstoffen mit unterschiedlichem Aufschlußgrad eine Vielzahl von unterschiedlichen Faserplatten erzeugen. Beispielsweise können durch Mischung von z.B. Fichte mit niederem SFC (= "Spruce Low") mit Buche mit hohem SFC (= "Beech High") und niederem SFC (= "Beech Low") unterschiedliche Biegefestigkeiten erzeugt werden. Der Verlauf des Biege-E-Moduls als Beispiel für technologische Eigenschaften und das Wasseraufnahmevermögen als Beispiel für chemische Eigenschaften verlaufen bei gleicher Mischung unterschiedlich. Die Daten lassen sich durch Gleichungen unter Berücksichtigung von linearen, Wechselwirkungs- und quadratischen Termen aus den Daten des Versuchsplanes berechnen.

Es ist möglich, daß gleichzeitig drei Eigenschaften innerhalb vorgegebener Grenzen erfüllt werden., Das Anforderungsprofil wird nur in den helleren Bereichen durch eine Mischung aus Buche "high" und Fichte "low" erfüllt.

Hält man zwei der vier Stellparameter konstant, so kann aufgrund des Fuzzy-Modells der Zusammenhang zwischen den anderen Stellgrößen und einer Qualität auch graphisch in beliebiger Kombination dargestellt werden.

Beispielsweise zeigt Figur 10 als Eigenschaftsprofil 81 in dreidimensionaler Darstellung die Biegefestigkeit ("flexural strength") von Fichte in Abhängigkeit vom SFC und Plattenabstand ("plate gap")des Refiners, wie sie mittels des Fuzzy-Modells ermittelt wurde. Daraus ergeben sich folgende Schlußfolgerungen:
Durch Mischung der reinen Rohstoffe mit unterschiedlichen Konzentrationen, ggfs. auch unter Zugabe von Rinde, und anschließender Prozessierung bei einem definierten "Severity Factor" lassen sich ebenso eine Vielzahl neuer Eigenschaftsprofile erzeugen. Dabei addieren sich in erster Näherung die Eigenschaftsprofile der Rohstoffe bei entsprechendem SFC linear.

## Patentansprüche

1. Verfahren zur Prozeßführung und Prozeßoptimierung bei der Herstellung von Fasermatten und/oder Faserplatten aus nachwachsenden, holzartigen und/oder lignozellulosischen Rohstoffen, wobei Hackschnitzel aus den Rohstoffen zu Faserstoffen aufbereitet und anschließend zu Matten geformt, und wobei die Matten getrocknet und/oder in einer Preßmaschine zu Platten verpreßt werden, **gekennzeichnet durch** folgende Verfahrensschritte:
- aus systematischen Versuchen werden Fundamentalmodelle erstellt, die Kenngrößen in Abhängigkeit von den Rohstoffen, den Verarbeitungsbedingungen und/oder den gewünschten Anwendungen enthalten,
- als wesentliche Kenngröße zur Modellbildung und Beschreibung der Prozesse wird der sogenannte Severity-Faktor (SFC) benutzt, wobei in Abhängigkeit vom Severity-Faktor (SFC) aus den Modellen die Verarbeitungsbedingungen und/oder die physikalischen, chemischen und/oder technologischen Produkteigenschaften berechnet werden,
- daraus werden Stell- und/oder Regelgrößen zur Einstellung bzw. Regelung der erforderlichen Prozeßparameter abgeleitet.

2. Verfahren nach Anspruch 1, **dadurch gekennzeichnet, daß** bei der Versuchsplanung zur Erstellung der Fundamentalmodelle weite Grenzen gewählt werden, wobei charakteristische Materialparameter sowie deren Einfluß auf die Prozeßführung ermittelt werden und wobei die Korrelation zwischen den charakteristischen Rohstoff- und Prozeßparametern sowie den Produkteigenschaften bestimmt werden.

3. Verfahren nach Anspruch 2, **dadurch gekennzeichnet, daß** aus den Versuchen Material- und/oder Anforderungsprofile ermittelt werden.

4. Verfahren nach Anspruch 1, **dadurch gekennzeichnet, daß** die Abhängigkeit der mechanischen und/oder chemischen Produkteigenschaften vom Severity-Faktor (SFC) berücksichtigt wird.

5. Verfahren nach Anspruch 4, **dadurch gekennzeichnet, daß** durch chemische Einflußnahme die Qualität der Fasermatten beeinflußt wird.

6. Verfahren nach Anspruch 5, **dadurch gekennzeichnet, daß** als chemische Einflußgrößen die bei der Aufbereitung anfallenden inhärenten Bindemittel herangezogen werden.

7. Verfahren nach einem der vorhergehenden Ansprüche, **dadurch gekennzeichnet, daß** das anfallende Prozeßwasser und/oder zusätzliche Chemikalien zur Einstellung bzw. Regelung verwendet werden.

8. Verfahren nach Anspruch 7, **dadurch gekennzeichnet, daß** das Prozeßwasser und die Bindemittel durch geeignete chemische Maßnahmen beeinflußt wird.

9. Verfahren nach einem der vorhergehenden Ansprüche, wobei ein Refiner zur Aufbereitung der Rohstoffe verwendet wird, **dadurch gekennzeichnet, daß** als weitere Prozeßvariable die mechanischen Parameter des Refiners, wie insbesondere dessen Spalt, Drehzahl und/oder Geometrie, herangezogen werden.

10. Verfahren nach einem der vorhergehenden Ansprüche, **dadurch gekennzeichnet, daß** ein Regelwerk ermittelt wird, mit dem der Herstellungsprozeß entsprechend den Rohstoffeigenschaften und den Produktvorgaben modelliert wird.

11. Verfahren nach Anspruch 10, daß das Regelwerk unter Verwendung von Fuzzy-Logik ermittelt wird.

12. Verfahren nach Anspruch 11, **dadurch gekennzeichnet, daß** anhand des Fuzzy-Modells der Produktionsprozeß durch Simulation optimiert wird.

## Claims

1. Method for conducting and optimizing a process in the production of fiber mats and/or fiber boards of renewable, wood-like and/or lignocellulosic raw materials, wherein coarse chips of the raw materials are processed into fibrous materials and subsequently formed into mats, and wherein the mats are dried and/or pressed into boards in a pressing machine, **characterized by** the following method steps:
systematic trials are used to create fundamental models, which comprise characteristic variables dependent on the raw materials, the processing conditions and/or the desired applications,
what is known as the severity factor (SFC) is used as an essential characteristic variable for forming the model and
describing the processes, wherein the processing conditions and/or the physical, chemical and/or technological product properties are calculated from the models in dependence on the severity factor (SFC),
said processing conditions and/or product properties are used to derive manipulated and/or controlled variables for setting or controlling the required process parameters.

2. Method according to Claim 1, **characterized in that** wide limits are chosen when planning the trials for creating the fundamental models, wherein characteristic material parameters and their influence on the conduction of the process are determined and wherein the correlation between the characteristic raw material parameters and process parameters and the product properties are determined.

3. Method according to Claim 2, **characterized in that** material profiles and/or requirement profiles are determined from the trials.

4. Method according to Claim 1, **characterized in that** the dependence of the mechanical and/or chemical product properties on the severity factor (SFC) is taken into account.

5. Method according to Claim 4, **characterized in that** the quality of the fiber mats is influenced by chemical influence.

6. Method according to Claim 5, **characterized in that** the inherent binders occurring during the processing are used as chemical influencing variables.

7. Method according to one of the preceding claims, **characterized in that** the process water and/or additional chemicals occurring are used for setting or control.

8. Method according to Claim 7, **characterized in that** the process water and the binders are influenced by suitable chemical measures.

9. Method according to one of the preceding claims, wherein a refiner is used for the processing of the raw materials, **characterized in that** the mechanical parameters of the refiner, such as in particular its gap, rotational speed and/or geometry, are used as further process variables.

10. Method according to one of the preceding claims, **characterized in that** a set of rules with which the production process is modelled in accordance with the raw material properties and the product specifications is determined.

11. Method according to Claim 10, **characterized in that** the set of rules is determined by using fuzzy logic.

12. Method according to Claim 11, **characterized in that** the production process is optimized by simulation on the basis of the fuzzy model.

## Revendications

1. Procédé pour conduire et optimiser un processus dans la fabrication de nappes de fibres et/ou de plaques de fibres en matières premières de régénération du type bois et/ou lignocellulosiques, dans lequel on prépare des copeaux hachés en les matières premières en matière fibreuse et on les conforme ensuite en nappes, et dans lequel on sèche les nappes et/ou on les comprime en plaques dans une presse, **caractérisé par** des stades de procédé suivants :
- à partir d'essais systématiques, on établit des modèles fondamentaux qui contiennent des grandeurs caractéristiques en fonction des matières premières, des conditions de traitement et/ou des applications souhaitées,
- on utilise, comme grandeur caractéristique essentielle pour la formation des modèles et la description des processus, ce que l'on appelle le facteur de sévérité ( SFC ), dans lequel on calcule en fonction du facteur de sévérité ( SFC ), à partir des modèles, les conditions de traitement et/ou les propriétés physiques, chimiques et/ou technologiques du produit,
- on en déduit des grandeurs de réglage et/ou de régulation, pour régler ou réguler les paramètres de processus qui sont nécessaires.

2. Procédé suivant la revendication 1, **caractérisé en ce que** l'on choisit dans le plan d'essai des limites larges pour établir les modèles fondamentaux, des paramètres caractéristiques de matériau ainsi que leur influence sur la façon dont le processus est mené étant déterminés et les corrélations entre les paramètres caractéristiques de matière première et de processus ainsi que les propriétés du produit étant déterminées.

3. Procédé suivant la revendication 2, **caractérisé en ce que** l'on détermine des profils de matériau et/ou d'exigence à partir des essais.

4. Procédé suivant la revendication 1, **caractérisé en ce que** l'on tient compte de la dépendance des propriétés mécaniques et/ou chimiques du produit en fonction du facteur de sévérité ( SFC ).

5. Procédé suivant la revendication 4, **caractérisé en ce que** l'on influe sur la qualité des nappes de fibres par une prise d'influence chimique.

6. Procédé suivant la revendication 5, **caractérisé en ce que** l'on tire parti, comme paramètres chimiques, des liants inhérents se produisant lors de la préparation.

7. Procédé suivant l'une des revendications précédentes, **caractérisé en ce qu'**on utilise l'eau du processus qui se produit et/ou du produit chimique supplémentaire pour le réglage ou la régulation.

8. Procédé suivant la revendication 7, **caractérisé en ce que** l'eau du processus et les liants sont influencés par des mesures chimiques appropriées.

9. Procédé suivant l'une des revendications précédentes, dans lequel on utilise un raffineur pour traiter les matières premières, **caractérisé en ce que** l'on tire parti, comme variable supplémentaire du processus, des paramètres mécaniques du raffineur, comme notamment de son intervalle, de sa vitesse de rotation et/ou de sa géométrie.

10. Procédé suivant l'une des revendications précédentes, **caractérisé en ce que** l'on détermine un ensemble de règles par lequel le processus de fabrication est modélisé d'une façon qui correspond aux propriétés de la matière première et aux prescriptions du produit.

11. Procédé suivant la revendication 10, **caractérisé en ce qu'**on détermine l'ensemble de règles en utilisant la logique floue.

12. Procédé suivant la revendication 11, **caractérisé en ce que** l'on optimise par simulation le processus de production au moyen du modèle flou.
